# EUROPÄISCHE PATENTSCHRIFT

(11) **EP 3 492 218 B1**
(45) Veröffentlichungstag und Bekanntmachung des Hinweises auf die Patenterteilung: **28.09.2022**
(21) Anmeldenummer: 18206817.1
(22) Anmeldetag: 16.11.2018
(51) Int. Cl.: B23Q 1/52, B23Q 11/00

(54) **WERKSTÜCKTRÄGERVORRICHTUNG**
WORKPIECE SUPPORT DEVICE
DISPOSITIF PORTE-PIÈCES

(30) Priorität: 28.11.2017 DE 102017128099
(43) Veröffentlichungstag der Anmeldung: 05.06.2019
(73) Patentinhaber: Gebr. Heller Maschinenfabrik GmbH, 72622 Nürtingen (DE)
(72) Erfinder: Walz, Jürgen, 72636 Frickenhausen (DE); Hummel, Erhard, 73278 Schlierbach (DE)
(74) Vertreter: Rüger Abel Patentanwälte PartGmbB

(56) Entgegenhaltungen:
- CN-B- 103 978 379
- DE-A1-102012 022 890
- DE-A1-102014 118 134
- DE-U1- 8 418 541

## Beschreibung

Die Erfindung betrifft eine Werkstückträgervorrichtung für eine Werkzeugmaschine. Die Werkstückträgervorrichtung hat einen Träger zum Halten bzw. Aufspannen eines Werkstücks. Der Träger kann relativ zu einem Maschinengestell oder einem Maschinenbecken der Werkzeugmaschine linear und/oder rotativ bewegbar gelagert sein.

Eine Werkzeugmaschine mit einem Werkstücktisch ist in EP 2 495 069 B1 beschrieben. Der Werkstücktisch ist in Vertikalrichtung an zwei übereinander angeordneten Schienen gelagert und entlang der Schienen verfahrbar. An dem Werkstücktisch ist ein Sensor angeordnet, um die horizontale Ausrichtung des Werkstücktisches zu messen. Durch Schwingungen oder Vibrationen in der Werkzeugmaschine kann der Werkstücktisch aus seiner idealen horizontalen Position ausgelenkt werden. Benachbart zu wenigstens einer der Schienen ist ein Piezoaktor in einem Hohlraum des Werkstücktisches angeordnet. Der Piezoaktor ist in der Lage, den Werkstücktisch elastisch zu verformen. Abhängig von dem Messwert des Sensors wird der Piezoaktor während des Betriebs der Werkzeugmaschine derart angesteuert, dass Schwingungen und Vibrationen ausgeglichen werden und der Werkstücktisch eine horizontale Ausrichtung beibehält.

Mit solchen Piezoaktoren lässt sich eine schnelle Ansteuerung während des Betriebs der Werkzeugmaschine erreichen. Allerdings ist der erreichbare Hub und die erreichbare elastische Verformung relativ klein. Zum Ausgleich von Beeinflussungen durch Vibrationen und Schwingungen kann eine piezoelektrische Aktuatorausführung ausreichend sein.

Eine Werkzeugmaschine mit einer Positionskorrektur durch einen Piezoaktor ist auch aus WO 00/37213 A2 bekannt. Mittels der Piezoaktoren kann während der Bearbeitung eine Abweichung in einer Position, insbesondere einer Position einer Werkzeugspindel, durch Ansteuern des Piezoaktors ausgeglichen werden.

EP 2 623 257 B1 beschreibt eine Werkzeugmaschine mit einer Positionsausgleichsvorrichtung. Benachbart zu einer Spindel sind Druckelemente in der Werkzeugmaschine angeordnet, die beispielsweise durch eine hydraulische Druckdose gebildet sein können. Durch Druckbeaufschlagung des Druckelements kann die Spindel radial zur Spindelachse justiert werden. Abhängig von der Position des Druckelements oder von mehreren solcher Druckelemente, kann eine Justage in einer oder mehreren Radialrichtungen gegenüber der Spindelachse erfolgen.

CN 103978379 B offenbart eine Vertikaldrehbank. Auf einem Rundtisch sind radial verlaufende T-Nuten vorhanden, in denen Spannbacken geführt angeordnet sind. Die Spannbacken können über sich radial erstreckende Zugstäbe bewegt werden, um ein Werkstück zu spannen.

Aus DE 84 18 541 U1 ist eine Werkzeugmaschine bekannt, bei der der Werkzeugschlitten hängend gelagert und über eine Kolben-Zylinder-Anordnung am Maschinengestell abgestützt ist.

DE 10 2012 022 890 A1 offenbart ein Fügewerkzeug mit einem Fügewerkzeugrahmen aus Faserverbundwerkstoff. Der Fügewerkzeugrahmen ist C-förmig mit einem Mittelstück aus Faserverbundwerkstoff und einem freien Schenkel, an dessen Ende ein metallisches Endstück angebracht ist. Das metallische Endstück ist über einen Zuganker im Mittelstück verankert.

DE 10 2014 118 134 A1 offenbart eine Werkstückträgervorrichtung gemäß dem Oberbegriff des Patentanspruches 1.

Der vorliegenden Erfindung liegt das Problem zugrunde, dass bei einer Belastung der Werkstückträgervorrichtung durch das Werkstück, eine Verformung durch die Gewichtskraft des Werkstücks auftreten kann. Abhängig von der Größe des Werkstücks kann es dadurch zu Bearbeitungsungenauigkeiten kommen, da sich das Werkstück in der Werkstückträgervorrichtung nicht in einer angenommenen, definierten Sollposition befindet.

Es ist daher die Aufgabe der vorliegenden Erfindung, eine Werkstückträgervorrichtung zu schaffen, bei der derartige Abweichungen zumindest verringert sind.

Diese Aufgabe wird durch eine Werkstückträgervorrichtung mit den Merkmalen des Patentanspruches 1 sowie ein Verfahren mit den Merkmalen des Patentanspruches 15 gelöst.

Die Werkstückträgervorrichtung für eine Werkzeugmaschine gemäß der vorliegenden Erfindung hat einen Träger mit einem Lagerteil und einem Trägerteil. Das Lagerteil ist mit einer Lagereinrichtung verbunden. Das Lagerteil ist dazu eingerichtet, den Träger an der Lagereinrichtung zu lagern. Die Lagerung kann eine Bewegung des Trägers in einem oder mehreren Freiheitsgraden zulassen, beispielsgemäß in einem rotativen Freiheitsgrad um eine Drehachse. Das Trägerteil erstreckt sich in einer Querrichtung vom Lagerteil weg. Die Querrichtung kann horizontal ausgerichtet sein. Das Trägerteil ist dazu eingerichtet, das Werkstück mittelbar oder unmittelbar zu tragen. Beispielsweise kann eine Halteeinrichtung zum Halten eines Werkstücks am Trägerteil angeordnet sein. Die Halteeinrichtung kann beispielsweise zum Einspannen des Werkstücks ausgebildet sein.

Im und/oder am Träger ist wenigstens eine Vorspanneinrichtung angeordnet. Bei einem bevorzugten Ausführungsbeispiel sind zumindest zwei Vorspanneinrichtungen vorhanden. Die Vorspanneinrichtung kann zumindest einen Teil des Lagerteils und/oder des Trägerteils mit einer Vorspannung beaufschlagen. Die Vorspannung kann eine Zugspannung bzw. Zugkraft oder eine Druckspannung bzw. Druckkraft sein. Die Vorspannung wird bevorzugt vor dem Bearbeiten eines Werkstücks voreingestellt und wird insbesondere während dem Betrieb der Werkzeugmaschine unverändert beibehalten. Die Vorspannung kann sozusagen statisch bzw. quasistatisch sein. Vorzugsweise findet keine dynamische Änderung der Vorspannung bei der Verwendung der Werkstückträgervorrichtung bzw. beim Betrieb der Werkzeugmaschine statt.

Durch das Einbringen der Vorspannung in zumindest einen Abschnitt des Trägers kann der Verformung des Trägers durch die Gewichtskraft eines auf dem Träger angeordneten Werkstücks entgegengewirkt werden. Dadurch kann eine gewünschte Ausrichtung des Trägerteils in Querrichtung bzw. Horizontalrichtung unter der Last des Werkstücks erreicht werden. Die Vorspannung wird insbesondere in dem Teil des Trägers eingebracht, in dem das Trägerteil mit dem Lagerteil verbunden ist. Die Vorspanneinrichtung kann ausschließlich im Lagerteil angeordnet sein oder abschnittsweise im Lagerteil und im Trägerteil angeordnet sein.

Bevorzugt wird der Betrag der Vorspannung in wenigstens einer Vorspanneinrichtung derart gewählt, dass sich der Elastizitätsmodul des unter Vorspannung stehenden Teils des Lagerteils und/oder des Trägerteils verändert. Der Elastizitätsmodul des Trägers ist bei dieser Ausführung nicht linear, sodass er durch das Einbringen der Vorspannung verändert und insbesondere verringert werden kann. Dies führt wiederum dazu, dass bei einer Belastung des Trägerteils eine geringere Positionsabweichung durch eine elastische Verformung auftritt, da diese Positionsabweichung bzw. elastische Verformung abhängig ist vom und insbesondere proportional ist zum Elastizitätsmodul.

Die wenigstens eine Vorspanneinrichtung ist an einem ersten Ende und einem dem ersten Ende entgegengesetzten zweiten Ende mit dem Träger verankert und die Vorspannung wird zwischen diesen Enden erzeugt. Der Abstand zwischen dem ersten Ende und dem zweiten Ende beträgt bevorzugt mindestens 100 mm oder mindestens 140 mm. Die Vorspanneinrichtung kann sich zwischen den beiden Enden geradlinig erstrecken. Die Vorspanneinrichtung kann mechanisch arbeiten. Vorzugsweise ist die wenigstens eine Vorspanneinrichtung frei von elektrisch ansteuerbaren Aktuatoren.

Die wenigstens eine Vorspanneinrichtung weist an dem ersten Ende eine erste Buchse und an dem zweiten Ende eine zweite Buchse auf. Jede Buchse hat jeweils ein Buchseninnengewinde und ein Buchsenaußengewinde. Wenigstens eine der Buchsen hat am Buchseninnengewinde und am Buchsenaußengewinde unterschiedliche Gewindesteigungen bzw. Ganghöhen. Mit dem Buchsenaußengewinde sind die Buchsen bevorzugt in jeweils ein Trägerinnengewinde des Trägers eingeschraubt.

Die Vorspanneinrichtung kann außerdem einen Stab und insbesondere einen Gewindestab aufweisen, mittels dem die beiden Buchsen verbunden sind und der beispielsgemäß in jeweils ein Buchseninnengewinde der beiden Buchsen eingeschraubt ist. Die wirksame Länge des Stabes zwischen den beiden Buchsen definiert die in den Träger eingebrachte Vorspannung. Über die Differenz der Gewindesteigungen bzw. Ganghöhen an wenigstens einer der Buchsen kann diese wirksame Länge des Stabes verändert und damit die Vorspannung eingestellt werden. Je kleiner die Differenz der Gewindesteigungen bzw. Ganghöhen an der wenigstens einen Buchse ist, desto geringer ist das Moment zum Einstellen einer gewünschten Vorspannung.

Bei einem nicht erfindungsgemäßen Ausführungsbeispiel der Werkstückträgervorrichtung ist die wenigsten eine Vorspanneinrichtung durch eine Druckkammer gebildet. In der Druckkammer kann ein Fluiddruck erzeugt werden, um die Vorspannung zu bilden. Die Druckkammer kann vorzugsweise eine zylindrische Form aufweisen. Die Druckkammer kann beispielsweise innerhalb eines Rohres gebildet sein, das beim Herstellen des Trägers in den Träger eingegossen wird und an entgegengesetzten Enden fluiddicht zur Bildung der Druckkammer verschlossen werden kann.

Mittels der Vorspannung kann eine Justage des Trägerteils abhängig von dem Gewicht bzw. der Gewichtskraft des zu bearbeitenden Werkstücks erfolgen, insbesondere vor dem Bearbeiten des Werkstücks in der Werkzeugmaschine. Während des Betriebs ist die Vorspannung vorzugsweise unveränderlich. Alternativ hierzu könnte die Vorspannung vor dem und/oder während des Betriebs der Werkzeugmaschine auch gesteuert oder geregelt werden.

Es ist bevorzugt, wenn mehrere Vorspanneinrichtungen vorhanden sind. Die Vorspanneinrichtungen können parallel zueinander im Träger angeordnet sein.

Es ist außerdem vorteilhaft, wenn die Vorspannungen von unterschiedlichen Vorspanneinrichtungen unabhängig einstellbar bzw. voreinstellbar sind.

Sind mehrere Vorspanneinrichtungen vorhanden, sind diese bevorzug symmetrisch zu einer Mittelebene durch den Träger angeordnet. Die Mittelebene verläuft parallel zur Querrichtung.

Es ist außerdem vorteilhaft, wenn die wenigstens eine Vorspanneinrichtung ein erstes Ende und einem ersten Ende entgegengesetztes zweites Ende aufweist. Das erste Ende und das zweite Ende sind in einer Normalenrichtung rechtwinkelig zum Trägerteil versetzt zueinander angeordnet. Durch diese Anordnung kann sich die Vorspanneinrichtung schräg durch einen abgewinkelten und/oder gekrümmten Bereich des Trägers erstrecken, insbesondere im Verbindungsbereich zwischen dem Trägerteil und dem Lagerteil.

Der Träger kann mittels der Lagereinrichtung um eine Drehachse drehbar gelagert sein. An der Lagereinrichtung kann ein Antriebsmotor zur Drehung des Trägers um die Drehachse angeordnet sein. Die Drehachse verläuft insbesondere parallel zur Querrichtung. Auf der der Lagereinrichtung entgegengesetzten Seite kann der Träger optional durch eine Stützeinheit abgestützt sein, wobei auch die Stützeinheit eine Drehlagerstelle bereitstellen kann. Die Stützwirkung durch die Lagereinrichtung und die Stützeinheit können dabei unterschiedlich sein, sodass eine asymmetrische Abstützung des Trägers vorliegt. Die Steifigkeiten bei der Abstützung des Trägers durch die Lagereinrichtung und die Stützeinheit sind bei einem Ausführungsbeispiel unterschiedlich groß. Auch bei einer solchen asymmetrischen Abstützung wird durch die wenigstens eine Vorspanneinrichtung einer Verformung des Trägers und mithin einer Positionsabweichung bei einer Belastung des Trägers durch das Werkstück entgegengewirkt.

Bei einer bevorzugten Ausführungsform sind das Lagerteil und das Trägerteil integral ohne Naht-und Füllgestelle aus einem einheitlichen Material hergestellt. Das Lagerteil und das Trägerteil und vorzugsweise der gesamte Träger können aus Graugussmaterial, beispielsweise GGG 60, bestehen.

Die Werkstückträgervorrichtung kann in einer Werkzeugmaschine wie folgt justiert werden:

Abhängig vom Gewicht des zu bearbeitenden Werkstücks wird eine Vorspannung über die wenigstens eine Vorspanneinrichtung voreingestellt, bevor die Werkzeugmaschine in Betrieb genommen und das Werkstück bearbeitet wird. Vorzugsweise wird die Vorspannung voreingestellt, bevor das Werkstück in der Werkstückträgervorrichtung angeordnet wird. Anschließend kann die Bearbeitung des Werkstücks oder mehrerer gleichartiger bzw. gleich schwerer Werkstücke erfolgen. Die Vorspannung wird vorzugsweise nur dann verändert, wenn ein zu bearbeitendes Werkstück ein anderes Gewicht hat als das jeweils zuvor bearbeitete Werkstück.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:
Figur 1 eine schematische, blockschaltbildähnliche Darstellung einer Werkstückträgervorrichtung in einer Seitenansicht,
Figur 2 die Werkstückträgervorrichtung aus Figur 1 mit einem Werkstück, dessen Gewichtskraft auf einen Träger der Werkstückträgervorrichtung einwirkt,
Figur 3 eine schematische, blockschaltbildähnliche Darstellung eines Ausführungsbeispiels der Werkstückträgervorrichtung mit wenigstens einer Vorspanneinrichtung in einer Seitenansicht,
Figur 4 eine schematische, blockschaltbildähnliche Darstellung eines weiteren Ausführungsbeispiels einer Werkstückträgervorrichtung mit wenigstens einer Vorspanneinrichtung in einer Seitenansicht,
Figur 5 den Träger der Werkstückträgervorrichtung aus Figur 3 in einer schematischen Rückansicht,
Figur 6 den Träger der Werkstückträgervorrichtung aus Figur 4 in einer schematischen Rückansicht,
Figur 7 eine schematische Darstellung eines Ausführungsbeispiels einer Vorspanneinrichtung der Werkstückträgervorrichtungen gemäß der Figuren 3-6,
Figur 8 eine schematische Darstellung eines nicht erfindungsgemäßen Beispiels einer Vorspanneinrichtung für die Werkstückträgervorrichtungen gemäß der Figuren 3-6,
Figur 9 eine schematische Darstellung eines durch ein Spannungs-Dehnungs-Diagramm definierten Elastizitätsmoduls und
Figur 10 ein Flussdiagramm eines Verfahrens zur Verwendung der Werkstückträgervorrichtung in einer Werkzeugmaschine umfassend eine Justage der Werkstückträgervorrichtung in der Werkzeugmaschine.

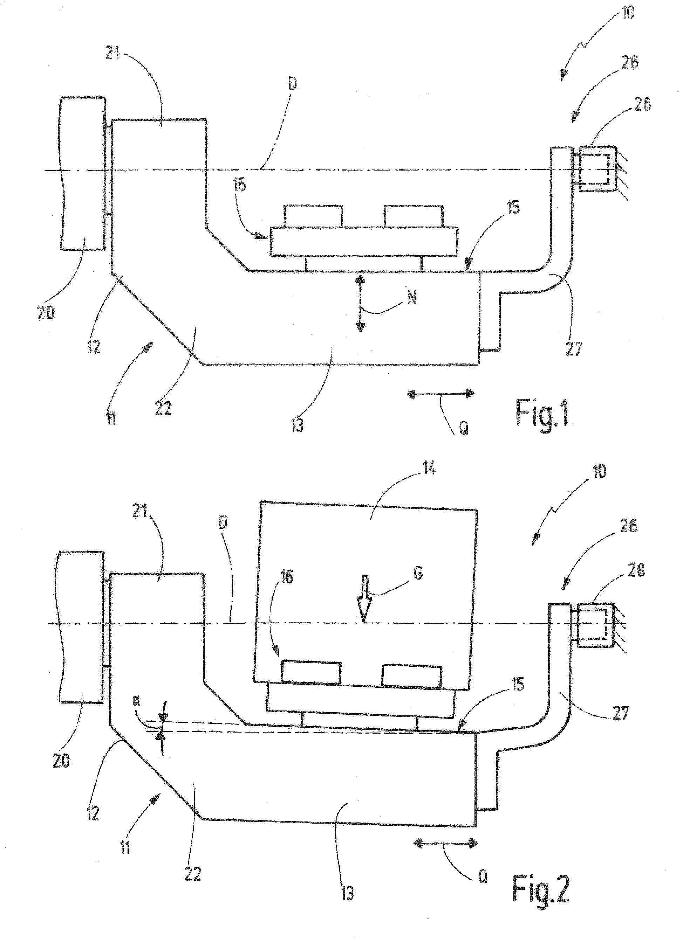

Die Erfindung betrifft eine Werkstückträgervorrichtung 10 für eine nicht dargestellte Werkzeugmaschine. Verschiedene Werkstückträgervorrichtungen 10 sind in den Figuren 1-4 veranschaulicht. Die Werkstückträgervorrichtung 10 weist einen Träger 11 mit einem Lagerteil 12 und einem Trägerteil 13 auf. Der Träger 11 bzw. zumindest das Trägerteil 13 und das Lagerteil 12 sind einstückig integral ausgebildet und bestehen beim bevorzugten Ausführungsbeispiel aus einem Graugussmaterial, insbesondere GGG 60.

Das Trägerteil 13 ist dazu eingerichtet, ein Werkstück 14 mittelbar oder unmittelbar zu tragen. Wie es in den Figuren 1 und 2 veranschaulicht ist, ist an einer Oberseite 15 des Trägerteils 13 eine Halteeinrichtung 16 angeordnet, die zum Klemmen oder Einspannen des Werkstücks 14 eingerichtet ist.

Mittels des Lagerteils 12 ist der Träger 11 an einer Lagereinrichtung 20 um eine Drehachse D drehbar gelagert. Die Drehachse D erstreckt sich parallel zu einer Querrichtung Q. Bevorzugt ist die Drehachse D in einer Normalenrichtung N rechtwinklig zum Trägerteil 13 mit Abstand bzw. versetzt angeordnet. Bei einer Rotation des Trägers 11 um die Drehachse D bewegt sich das Trägerteil 13 daher auf einer Kreisbahn um die Drehachse D.

Das Lagerteil 12 hat einen Endabschnitt 21, mit dem es mit der Lagereinrichtung 20 verbunden ist. Der Endabschnitt 21 erstreckt sich im Wesentlichen rechtwinklig zur Querrichtung Q bis zu einem abgewinkelten und/oder gekrümmten Verbindungsabschnitt 22 des Lagerteils 12, der zwischen dem Endabschnitt 21 und dem Trägerteil 13 angeordnet ist und den Endabschnitt 21 mit dem Trägerteil 13 verbindet. Der Träger 11 bzw. das Trägerteil 13 zusammen mit dem Lagerteil 12 hat bzw. haben in der Seitenansicht rechtwinklig zur Drehachse D eine im Wesentlichen L-förmige Gestalt.

In Querrichtung Q entlang der Drehachse D kann der Träger 11 mit Abstand zur Lagereinrichtung 20 durch eine Stützeinheit 26 abgestützt und an einer weiteren Drehlagerstelle entlang der Drehachse D drehbar gelagert sein. Die Stützeinheit 26 weist beispielsgemäß einen Bügel 27 auf, der mit dem Trägerteil 13 verbunden ist, beispielsgemäß an dem dem Lagerteil 12 in Querrichtung Q entgegengesetzten Ende des Trägerteils 13. Der Bügel 27 verbindet das Trägerteil 13 mit einem Drehlager 28, das sich mittelbar oder unmittelbar am Maschinengestell oder der Maschinenbasis einer Werkzeugmaschine abstützen kann.

In Figur 2 ist die Belastung der Werkstückträgervorrichtung 10 bzw. des Trägers 11 mit dem Werkstück 14 veranschaulicht. Durch das Gewicht des Werkstücks 14 wirkt eine Gewichtskraft G auf das Trägerteil 13 ein und kann den Träger 13 elastisch verformen. In Figur 2 ist eine solche Verformung schematisch veranschaulicht. Dadurch kann sich das Trägerteil 13 relativ zur Querrichtung Q um einen Neigungswinkel α neigen und aus seiner optimalen, gewünschten Ausrichtung bezogen auf die Querrichtung Q ausgelenkt werden. Dies gilt insbesondere dann, wenn die Querrichtung Q horizontal ausgerichtet ist und die Normalenrichtung N im unbelasteten Zustand des Trägers 11 im Wesentlichen vertikal ausgerichtet ist. In dieser Position ist der Träger 11 gegenüber der Belastung durch die Gewichtskraft G beispielsgemäß am empfindlichsten.

Um einer solchen elastischen Verformung aufgrund der Gewichtskraft G eines Werkstücks 14 entgegenzuwirken, ist in dem Träger 11 erfindungsgemäß wenigstens eine Vorspanneinrichtung 32 angeordnet. Die Vorspanneinrichtung 32 ist dazu eingerichtet, zumindest einen Teil des Trägers 11 mit einer Vorspannung zu beaufschlagen. Die Vorspannung kann den betreffenden Teil des Trägers 11 unter eine Zugspannung oder eine Druckspannung bringen.

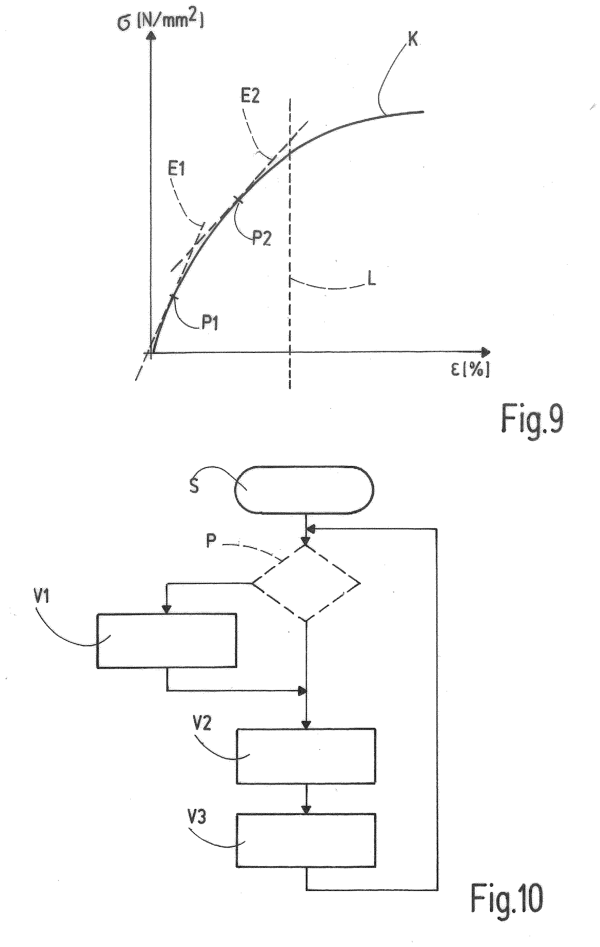

In Figur 9 ist schematisch das Spannungs-Dehnungs-Diagramm für den Träger 11 veranschaulicht. Der genaue Verlauf der Spannungs-Dehnungs-Kurve K kann abhängig vom Material des Trägers 11 variieren. Die Steigung der Spannungs-Dehnungs-Kurve K verändert sich. Dadurch, dass zumindest ein Teil des Trägers 11 durch die wenigstens eine Vorspanneinrichtung 32 bereits gestaucht oder gedehnt wird, kann der Elastizitätsmodul E, der der Steigung der Spannungs-Dehnungs-Kurve K entspricht, verringert werden. Die Steigung nimmt ausgehend vom Ursprung ab. An einem ersten Punkt P1 hat der Träger 11 einen ersten Elastizitätsmodul E1 und an einem zweiten Punkt P2 hat der Träger einen zweiten Elastizitätsmodul E2. Die elastische Verformung des Trägers 11 hängt vom Betrag der Gewichtskraft G sowie dem Betrag des Elastizitätsmoduls E ab. Wird dieser durch das Einbringen der Vorspannung verringert, wirkt sich die Gewichtskraft G weniger stark aus, so dass die Verformung des Trägers 11 durch das Einwirken der Gewichtskraft G des Werkstücks 14 verringert wird.

Die in Figur 9 gezeigte Spannungs-Dehnungs-Kurve K hat im 3. Quadranten qualitativ einen vergleichbaren nicht linearen Verlauf, so dass die vorstehenden Erläuterungen nicht nur für positive, sondern auch für negative Spannungen σ und Dehnungen ε gelten.

Da der Träger 11 in Querrichtung Q und rechtwinkelig zu der Querrichtung Q und der Normalenrichtung N unterschiedliche Abmessungen hat, hängt die Verformung des Trägers 11 außerdem von der Drehlage des Trägers 11 um die Drehachse D ab. Durch die erfindungsgemäße Ausgestaltung und das Erzeugen der Vorspannung können Abweichungen von der Sollausrichtung des Trägers 11 in Querrichtung Q betrachtet reduziert und im Idealfall vollständig vermieden werden.

Aus der Darstellung in Figur 9 ist ersichtlich, dass der Elastizitätsmodul entlang der Spannungs-Dehnungs-Kurve K ausgehend vom Ursprung abnimmt. Abhängig vom Gewicht des Werkstücks 14 kann daher eine Vorspannung mittels der wenigstens eine Vorspanneinrichtung 32 erzeugt werden, um die Auswirkungen der Gewichtskraft G des Werkstücks 14 ausreichend klein zu halten. Vorzugsweise wird die Vorspannung nur so groß gewählt, dass eine plastische Verformung des Trägers 11 durch die Vorspannung und die Gewichtskraft G vermieden wird. In Figur 9 ist eine Trennlinie L eingezeichnet, die den Bereich elastischer und plastischer Verformung trennt.

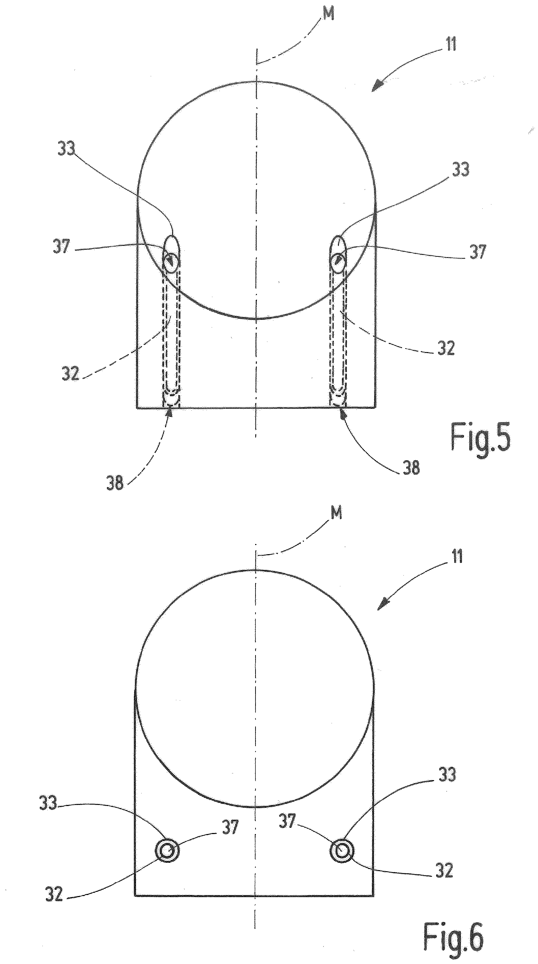

Bei dem hier beschriebenen Ausführungsbeispiel weist die Werkstückträgervorrichtung 10 zwei separate Vorspanneinrichtungen 32 auf. Bevorzugt kann die jeweilige Zugkraft oder Druckkraft jeder Vorspanneinrichtung 32 separat und unabhängig von der Zugkraft bzw. Druckkraft der jeweils anderen Vorspanneinrichtung 32 voreingestellt werden. Die Vorspanneinrichtungen 32 sind im Träger 11 mit gleichem Abstand auf entgegengesetzten Seiten bezüglich einer Mittelebene M durch den Träger 11 angeordnet (Figuren 5 und 6). Die Mittelebene M erstreckt sich entlang der Drehachse D bzw. parallel zur Querrichtung Q mittig durch den Träger 11. Die Vorspanneinrichtungen 32 sind bevorzugt symmetrisch zu dieser Mittelebene M im Träger 11 angeordnet.

Bei den hier beschriebenen bevorzugten Ausführungsformen der Vorspanneinrichtungen 32 erstreckt sich die Vorspanneinrichtung 32 jeweils geradlinig innerhalb einer Ausnehmung 33 im Träger 11. Dabei durchsetzt jede Vorspanneinrichtung 32 zumindest einen Teil des Lagerteils 12 und insbesondere einen Teil des Verbindungsabschnitts 22. Die Vorspanneinrichtung 32 kann zumindest teilweise auch im Trägerteil 13 angeordnet sein. Die Vorspanneinrichtung 32 kann sich parallel zur Querrichtung Q oder geneigt zur Querrichtung Q erstrecken. Vorzugsweise erstreckt sich jede Vorspanneinrichtung 32 parallel zur Mittelebene M.

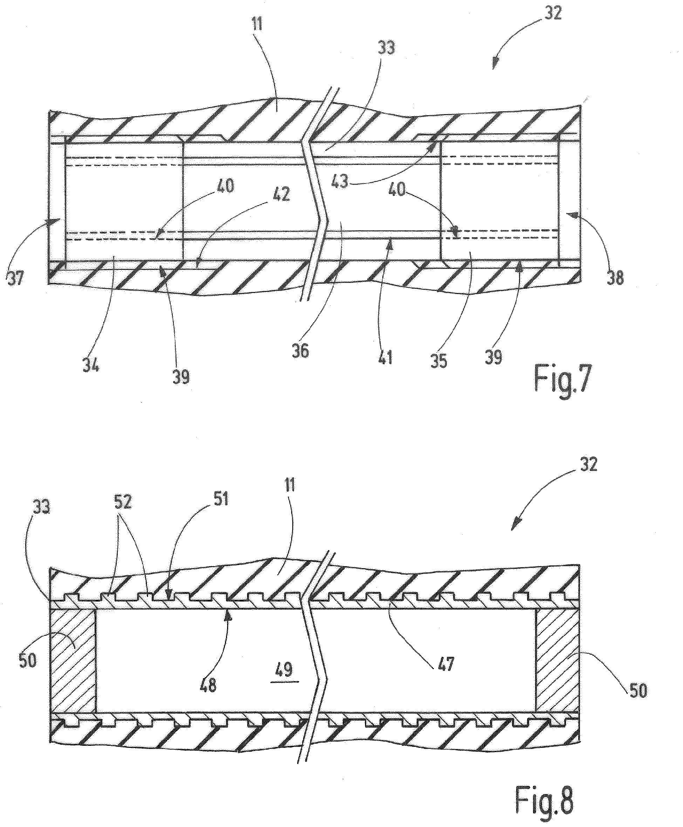

Figur 7 zeigt ein Ausführungsbeispiel für die Ausgestaltung einer bevorzugten Vorspanneinrichtung 32. Die Vorspanneinrichtung 32 arbeitet bei diesem Ausführungsbeispiel rein mechanisch. Fluidisch und/oder elektrisch angesteuerte bzw. beaufschlagte Elemente sind bei dieser Ausführung nicht vorhanden. Die Vorspanneinrichtung 32 gemäß Figur 7 weist eine erste Buchse 34, eine zweite Buchse 35 sowie einen Gewindestab 36 auf. Die erste Buchse 34 bildet ein erstes Ende 37 und die zweite Buchse 35 bildet ein dem ersten Ende 37 entgegengesetztes zweites Ende 38 der Vorspanneinrichtung 32. Jede Buchse 34 hat ein Buchsenaußengewinde 39 sowie ein Buchseninnengewinde 40. Der Gewindestab 36 hat ein Stabaußengewinde 41. Mit dem Stabaußengewinde 41 ist der Gewindestab 36 mit jeweils einem Abschnitt in das Buchseninnengewinde 40 eingeschraubt. Bei dem in Figur 7 veranschaulichten Ausführungsbeispiel erstreckt sich das Stabaußengewinde 41 entlang des gesamten Gewindestabs 36. In Abwandlung hierzu könnte der Gewindestab 36 in seinen beiden Endabschnitten jeweils ein Stabaußengewinde 41 aufweisen, wobei die beiden Stabaußengewinde in jeweils eine der beiden Buchsen 34 bzw. 35 eingeschraubt ist.

In der Ausnehmung 33 hat der Träger 11 ein erstes Trägerinnengewinde 42 und mit Abstand zum ersten Trägerinnengewinde 42 ein zweites Trägerinnengewinde 43. Die erste Buchse 34 ist mit ihrem Buchsenaußengewinde 39 in das erste Trägerinnengewinde 42 eingeschraubt. Die zweite Buchse 35 ist mit ihrem Buchsenaußengewinde 39 in das zweite Trägerinnengewinde 43 eingeschraubt. Die beiden Buchsen 34, 35 sind über den Gewindestab 36 miteinander verbunden. Durch Variieren der Länge der Vorspanneinrichtung 32 kann eine Druckkraft oder Zugkraft in den Träger 11 zwischen der Verbindungsstelle der ersten Buchse 34 mit dem Träger 11 und der Verbindungsstelle der zweiten Buchse 35 mit dem Träger 11 eingebracht werden. Über den Gewindestab 36 können die beiden Buchsen 34, 35 zur Erzeugung einer Druckkraft voneinander weg und zur Erzeugung einer Zugkraft aufeinander zu vorgespannt werden. Durch die Zugkraft wird der Träger 11 zwischen den Verbindungsstellen bzw. den Buchsen 34, 35 gestaucht und durch das Erzeugen einer Duckkraft wird der Träger 11 zwischen den Verbindungsstellen bzw. den Buchsen 34, 35 gestreckt.

Zur Einstellung der Zugkraft oder Druckkraft ist es beim Ausführungsbeispiel vorgesehen, dass die Gewindesteigungen bzw. Ganghöhen des Buchsenaußengewindes 39 und des Buchseninnengewindes 40 an zumindest einer der beiden Buchsen 34, 35 unterschiedlich groß sind. Beispielsweise kann die Differenz der Gewindesteigungen bzw. die Differenz der Ganghöhen zwischen dem Buchsenaußengewinde 39 und dem Buchseninnengewinde 40 0,5 mm betragen. Über diese Differenz in der Steigung bzw. der Ganghöhe kann das erforderliche Drehmoment zwischen der Buchse 34, 35 und dem Trägerinnengewinde 42, 43 sowie zwischen dem Buchseninnengewinde 40 und dem Stabaußengewinde 41 ausreichend klein gehalten werden, um die gewünschte Vorspannung (Zugkraft oder Drucckraft) zu erzeugen. Bei einem Ausführungsbeispiel weist das Buchsenaußengewinde 39 der zweiten Buchse 35 eine Ganghöhe von 2 mm auf. Die Buchseninnengewinde 40 sowie das Buchsenaußengewinde 39 der ersten Buchse 34 haben jeweils eine Ganghöhe von 1,5 mm.

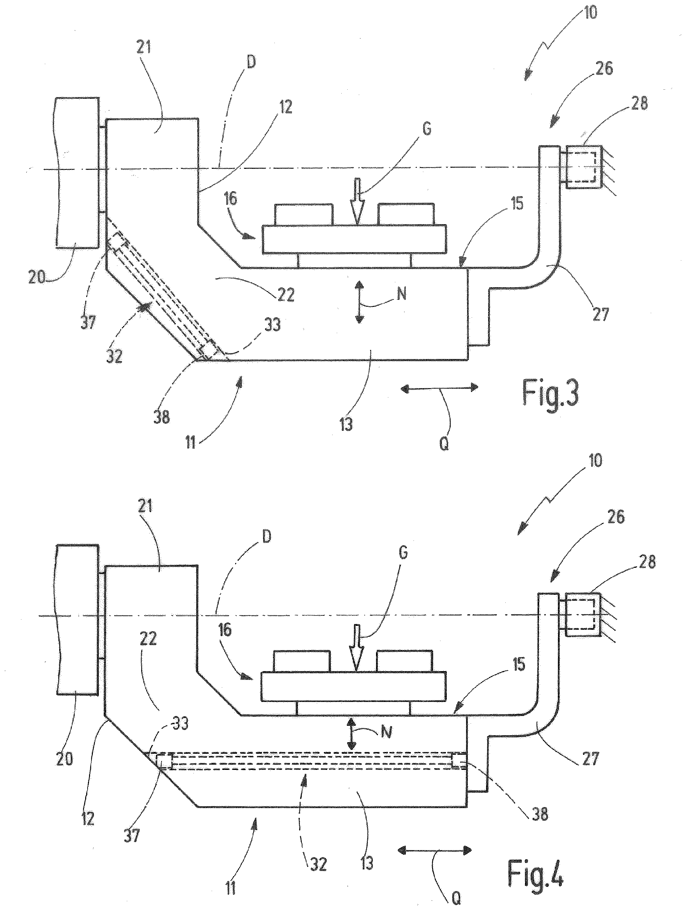

Beim Ausführungsbeispiel gemäß der Figuren 3 und 5 sind das erste Ende 37 und das zweite Ende 38 in Normalenrichtung N versetzt zueinander angeordnet. Das erste Ende 37 befindet sich beispielsgemäß näher an der Drehachse D als das zweite Ende 38. Das erste Ende 37 ist in der Ausnehmung 33 im Lagerteil 12 des Trägers 11 angeordnet. Das zweite Ende 38 ist in Querrichtung Q mit größerem Abstand zur Lagereinrichtung 20 angeordnet als das erste Ende 37. Das zweite Ende 38 kann sich innerhalb der Ausnehmung 33 im Lagerteil 12 oder im Trägerteil 13 befinden. Die Neigung der Vorspanneinrichtungen 32 beim Ausführungsbeispiel gemäß der Figuren 3 und 5 relativ zur Drehachse D kann beispielsweise im Bereich von 60 bis 70 oder bis 75 Grad liegen.

Bei dem in Figur 4 veranschaulichten Ausführungsbeispiel erstrecken sich die Verbindungseinrichtungen 32 parallel zur Querrichtung Q. Das zweite Ende 38 ist bei dieser Ausführung in der Ausnehmung 33 innerhalb des Trägerteils 13 angeordnet, während das erste Ende 37 im Lagerteil 12 angeordnet ist.

Die Ausnehmungen 33 sind bei den Ausführungsbeispielen gemäß der Figuren 3-6 als Durchgangslöcher ausgebildet, um die Montage der Vorspanneinrichtungen 32 zu vereinfachen. In Abwandlung zu der veranschaulichten Ausführungsform könnten die Trägerinnengewinde 42, 43 auch in mit Abstand zueinander angeordneten, fluchtenden Durchgangs-oder Sackbohrungen im Träger 11 ausgebildet sein. Ein Teil der Vorspanneinrichtungen 32 zwischen den beiden Enden 37, 38 kann dann frei außerhalb des Trägers 11 verlaufen. Beispielsweise könnte der Gewindestab 36 in einem mittleren Bereich zwischen den Buchsen 34, 35 von außen zugänglich sein.

In Figur 8 ist ein nicht erfindungsgemäßes Beispiel der Vorspanneinrichtung 32 veranschaulicht, mit dem lediglich eine Druckkraft als Vorspannung im Träger 11 erzeugt werden kann. Die Vorspanneinrichtung 32 gemäß Figur 8 arbeitet hydraulisch. In dem Träger 11 ist ein zylindrisches und beispielsgemäß kreiszylindrisches Rohr 47 eingesetzt und beispielsgemäß eingegossen. Die Innenwand 48 des Rohrs 47 begrenzt eine Druckkammer 49 in Umfangsrichtung. An entgegengesetzten Enden ist das Rohr 47 durch jeweils ein Verschlussteil 50 fluiddicht verschlossen. Innerhalb der Druckkammer 49 wird ein Fluiddruck und insbesondere ein hydraulischer Druck erzeugt, in dem die Druckkammer 49 mit einem Hydraulikmedium druckbefüllt wird. Durch diesen Druck werden die beiden Verschlussteile 50 voneinander weg gedrängt und stützen sich über das Rohr 47 am Träger 11 ab. Auf diese Weise kann eine Druckkraft im Rohr 47 bzw. der Druckkammer 49 erzeugt werden, die den Träger 11 entlang des Rohrs 47 streckt bzw. dehnt.

Wie es in Figur 8 veranschaulicht ist, weist die der Innenwand 48 entgegengesetzte Außenwand 51 des Rohrs 47 eine unebene Kontur auf. Beispielsweise kann an der Außenwand 51 wenigstens ein Verankerungselement, z.B. ein Vorsprung 52 vorhanden sein. Beispielsweise kann die Außenwand 51 des Rohrs mit einem Rohraußengewinde versehen sein. Alternativ hierzu können auch mehrere separate Vorsprünge 52 vorhanden sein, die sich beispielsweise koaxial um die Längsachse des Rohrs 47 erstrecken. Die unebene Außenwand 51 dient beim Eingießen des Rohrs 47 in den Träger 11 zur Verankerung des Rohrs in Träger 11, so dass der Druck in der Druckkammer 49, der eine Dehnung des Rohrs 47 in seiner Längsrichtung verursacht, auf den Träger 11 übertragen werden kann. Solche Verankerungselemente an der Außenwand 51 des Rohrs 47 sind zumindest im Bereich der beiden entgegengesetzten Rohrenden vorhanden. Bei dem in Figur 8 veranschaulichten Ausführungsbeispiel sind die Verankerungselemente in Form der Vorsprünge 52 im Wesentlichen gleichmäßig verteilt entlang des Rohrs 47 angeordnet.

Bei der Verwendung der erfindungsgemäßen Werkstückträgervorrichtung 10 in einer Werkzeugmaschine kann ein Verfahren ausgeführt werden, das in Figur 10 schematisch veranschaulicht ist. Nach dem Start S des Verfahrens wird vor der Bearbeitung des Werkstücks 14 zunächst in einem ersten Verfahrensschritt V1 die Vorspannung der wenigstens einen Vorspanneinrichtung 32 eingestellt, um den Träger 11 zu justieren. Der Betrag der Vorspannung wird abhängig von der Gewichtskraft G des zu bearbeitenden Werkstücks 14 eingestellt. Anschließend wird in einem zweiten Verfahrensschritt V2 das Werkstück 14 am Träger 11 angeordnet und mittels der Halteeinrichtung 16 gehalten. In einem dritten Verfahrensschritt V3 wird das Werkstück 14 bearbeitet und nach der Bearbeitung von der Werkstückträgervorrichtung 10 entnommen. Anschließend kann ein weiteres zu bearbeitendes Werkstück 14 in der Werkstückträgervorrichtung 10 angeordnet werden.

Sofern gleichartige Werkstücke 14 bearbeitet werden, bleibt die eingestellte Vorspannung aufrechterhalten. Sollen nachfolgend Werkstücke mit einem anderen Gewicht bearbeitet, wird die Vorspannung der wenigstens einen Vorspanneinrichtung 32 entsprechend an das veränderte Gewicht angepasst. Das Verfahren kann daher optional einen Prüfschritt P enthalten, bei dem nach dem Start S zunächst geprüft wird, ob das zu bearbeitende Werkstück 14 dasselbe Gewicht hat, wie das vorher bearbeitete Werkstück. Ist dies der Fall, wird die Voreinstellung der Vorspannkraft nicht verändert und das Verfahren wird mit dem zweiten Verfahrensschritt V2 fortgesetzt. Hat das zu bearbeitende Werkstück ein anderes Gewicht als das zuvor bearbeitete Werkstück, wird das Verfahren im ersten Verfahrensschritt V1 (Justage) fortgesetzt, bei dem die Vorspannung angepasst an die Gewichtskraft des zu bearbeitenden Werkstücks 14 voreingestellt wird.

Mittels der Vorspanneinrichtung 32 kann somit eine Justage der Werkstückträgervorrichtung 10 bzw. des Trägers 11 erfolgen, um Abweichungen in der gewünschten Position bzw. Ausrichtung des Werkstücks 10 durch seine Gewichtskraft G zu minimieren oder zu vermeiden. Während der Bearbeitung des Werkstücks 14 bleibt die eingestellte Vorspannkraft vorzugsweise konstant.

Die Erfindung betrifft eine Werkstückträgervorrichtung 10 für eine Werkzeugmaschine. Die Werkstückträgervorrichtung 10 hat einen Träger 11, der ein Lagerteil 12 und ein Trägerteil 13 aufweist. Mittels des Lagerteils 12 ist der Träger 11 an einer Lagereinrichtung 20 gelagert, vorzugsweise um eine Drehachse D drehbar gelagert. Das Trägerteil 13 ist dazu eingerichtet, ein Werkstück 14 unmittelbar oder mittelbar zu tragen. Um Abweichungen von einer gewünschten Sollausrichtung des Trägerteils 13 aufgrund einer elastischen Verformung des Trägers 11 durch die Gewichtskraft G des Werkstücks 14 zu vermeiden oder zumindest zu minimieren, ist am oder im Träger 11 wenigstens eine mechanische oder hydraulische Vorspanneinrichtung 32 angeordnet. Mittels der Vorspanneinrichtung 32 kann eine Vorspannung des Materials des Trägers 11 voreingestellt werden, so dass zumindest ein Teil des Trägers 11 mit einer Zugspannung oder einer Druckspannung des Vorspanneinrichtung 32 beaufschlagt wird. Dadurch kann einer Positionsabweichung durch eine elastische Verformung des Trägers 11 entgegengewirkt werden.

### Bezugszeichenliste:

- 10: Werkstückträgervorrichtung
- 11: Träger
- 12: Lagerteil
- 13: Trägerteil
- 14: Werkstück
- 15: Oberseite
- 16: Halteeinrichtung

- 20: Lagereinrichtung
- 21: Endabschnitt des Lagerteils
- 22: Verbindungsabschnitt des Lagerteils

- 26: Stützeinheit
- 27: Bügel
- 28: Drehlager

- 32: Vorspanneinrichtung
- 33: Ausnehmung
- 34: erste Buchse
- 35: zweite Buchse
- 36: Gewindestab
- 37: erstes Ende
- 38: zweites Ende
- 39: Buchsenaußengewinde
- 40: Buchseninnengewinde
- 41: Stabaußengewinde
- 42: erstes Trägerinnengewinde
- 43: zweites Trägerinnengewinde

- 47: Rohr
- 48: Innenwand des Rohrs
- 49: Druckkammer
- 50: Verschlussteil
- 51: Außenwand des Rohrs
- 52: Vorsprung

- α: Neigungswinkel
- ε: Dehnung
- σ: Spannung

- D: Drehachse
- G: Gewichtskraft
- K: Spannungs-Dehnungs-Kurve
- L: Trennlinie
- M: Mittelebene
- N: Normalenrichtung
- P: Prüfschritt
- Q: Querrichtung
- S: Start
- V1: erster Verfahrensschritt
- V2: zweiter Verfahrensschritt
- V3: dritter Verfahrensschritt

## Patentansprüche

1. Werkstückträgervorrichtung (10) für eine Werkzeugmaschine,
mit einem Träger (11), der ein Lagerteil (12) aufweist, das zur Lagerung des Trägers (11) mit einer Lagereinrichtung (20) verbunden ist, wobei der Träger (11) ein sich ausgehend vom Lagerteil (12) weg erstreckendes Trägerteil (13) aufweist, das dazu eingerichtet ist, ein Werkstück (14) zu tragen,
**dadurch gekennzeichnet,**
**dass** wenigstens eine Vorspanneinrichtung (32) vorhanden ist, die im Träger (11) angeordnet ist und zumindest einen Teil des Lagerteils (12) und/oder des Trägerteils (13) mit einer Vorspannung beaufschlagt,
**dass** die wenigstens eine Vorspanneinrichtung (32) an einem ersten Ende (37) und einem dem ersten Ende (37) entgegengesetzten zweiten Ende (38) mit dem Träger (22) verankert ist und die Vorspannung zwischen diesen Enden (37, 38) erzeugt wird, und
**dass** die Vorspanneinrichtung (32) an dem ersten Ende (37) eine erste Buchse (34) und an dem zweiten Ende (38) eine zweite Buchse (35) aufweist, wobei jede Buchse (34, 35) ein Buchseninnengewinde (40) und ein Buchsenaußengewinde (39) aufweist, und wobei das Buchseninnengewinde (40) und das Buchsenaußengewinde (39) wenigstens einer Buchse (35) unterschiedliche Gewindesteigungen haben.

2. Werkstückträgervorrichtung nach Anspruch 1,
**dadurch gekennzeichnet, dass** der Betrag der Vorspannung so gewählt ist, dass sich der Elastizitätsmodul (E) des unter Vorspannung stehenden Teils des Lagerteils (12) und/oder des Trägerteils (13) verändert.

3. Werkstückträgervorrichtung nach einem der vorhergehenden Ansprüche,
**dadurch gekennzeichnet, dass** die Buchsen (34, 35) mit den Buchsenaußengewinden (39) in ein jeweils zugeordnetes Trägerinnengewinde (42, 43) des Trägers (11) eingeschraubt sind.

4. Werkstückträgervorrichtung nach einem der vorhergehenden Ansprüche,
**dadurch gekennzeichnet, dass** die Vorspanneinrichtung (32) einen Gewindestab (36) aufweist, der mit jeweils einem Abschnitt in die Buchseninnengewinde (40) der beiden Buchsen (34, 35) eingeschraubt ist.

5. Werkstückträgervorrichtung nach einem der vorhergehenden Ansprüche,
**dadurch gekennzeichnet, dass** die Vorspannung der wenigstens eine Vorspanneinrichtung (32) zur Justage des Trägerteils (13) abhängig von einer Gewichtskraft (G) des zu bearbeitenden Werkstücks (14) voreingestellt wird.

6. Werkstückträgervorrichtung nach einem der vorhergehenden Ansprüche,
**dadurch gekennzeichnet, dass** mehrere Vorspanneinrichtungen (32) vorhanden sind.

7. Werkstückträgervorrichtung nach nach Anspruch 6,
**dadurch gekennzeichnet, dass** die Vorspannungen der Vorspanneinrichtungen (32) unabhängig einstellbar sind.

8. Werkstückträgervorrichtung nach nach Anspruch 6 oder 7,
**dadurch gekennzeichnet, dass** die Vorspanneinrichtungen (32) symmetrisch zu einer Mittelebene (M) durch den Träger (11) angeordnet sind.

9. Werkstückträgervorrichtung nach einem der vorhergehenden Ansprüche,
**dadurch gekennzeichnet, dass** die wenigstens eine Vorspanneinrichtung (32) ein erstes Ende (37) und ein dem ersten Ende (37) entgegengesetztes zweites Ende (38) aufweist, wobei das erste Ende (37) und das zweite Ende (38) in einer Normalenrichtung (N) rechtwinkelig zum Trägerteil (13) versetzt zueinander angeordnet sind.

10. Werkstückträgervorrichtung nach einem der vorhergehenden Ansprüche,
**dadurch gekennzeichnet, dass** der Träger (11) mittels der Lagereinrichtung (20) um eine Drehachse (D) drehbar gelagert ist.

11. Werkstückträgervorrichtung nach einem der vorhergehenden Ansprüche,
**dadurch gekennzeichnet, dass** sich das Trägerteil (13) in einer Querrichtung (Q) vom Lagerteil (12) weg erstreckt.

12. Werkstückträgervorrichtung nach Anspruch 10 und nach Anspruch 11,
**dadurch gekennzeichnet, dass** sich die Drehachse (D) in Querrichtung (Q) erstreckt.

13. Werkstückträgervorrichtung nach einem der vorhergehenden Ansprüche,
**dadurch gekennzeichnet, dass** der Träger (11) auf der der Lagereinrichtung (20) entgegengesetzten Seite mittels einer Stützeinheit (26) abgestützt ist.

14. Werkstückträgervorrichtung nach einem der vorhergehenden Ansprüche,
**dadurch gekennzeichnet, dass** der Träger (11) aus einem Graugussmaterial besteht.

15. Verfahren zur Justage einer Werkstückträgervorrichtung (10) nach einem der vorhergehenden Ansprüche einer Werkzeugmaschine, wobei die Vorspannung der wenigstens einen Vorspanneinrichtung (32) abhängig von der Gewichtskraft eines zu bearbeitenden Werkstücks (14) voreingestellt wird, bevor das Werkstück (14) bearbeitet wird.

16. Verfahren nach Anspruch 15,
**dadurch gekennzeichnet, dass** die voreingestellte Vorspannung der wenigstens einen Vorspanneinrichtung (32) während der Bearbeitung eines Werkstücks (14) unverändert gehalten wird.

## Claims

1. A workpiece holder device (10) for a machine tool,
with a holder (11) that has a support part (12) that is connected with a support device (20) to support the holder (11), wherein the holder (11) has a holder part (13) that extends away starting from the support part (12), this holder part (13) being configured to hold a workpiece (14),
**characterized in that**
at least one pretensioning device (32) is provided that is arranged in the holder (11) and that pretensions at least one section of the support part (12) and/or of the holder part (13)
the at least one pretensioning device (32) is anchored with the holder (22) at a first end (37) and a second end (38) opposite the first end (37), and that the pretension is produced between these ends (37, 38), and
the pretensioning device (32) has a first bushing (34) at the first end (37) and a second bushing (35) at the second end (38), each bushing (34, 35) having a bushing inner thread (40) and a bushing outer thread (39), and the bushing inner thread (40) and the bushing outer thread (39) of at least one bushing (35) having different thread pitches.

2. A workpiece holder device according to claim 1, **characterized in that** the amount of the pretension is selected to change the modulus of elasticity (E) of the pretensioned section of the support part (12) and/or of the holder part (13).

3. A workpiece holder device according to any of the preceding claims,
**characterized in that** the bushing outer threads (39) of each of the bushings (34, 35) are screwed into an associated holder inner thread (42, 43) of the holder (11) .

4. A workpiece holder device according to any of the preceding claims,
**characterized in that** the pretensioning device (32) has a threaded rod (36), one section of which is screwed into the bushing inner thread (40) of each of the two bushings (34, 35) respectively.

5. A workpiece holder device according to any one of the preceding claims,
**characterized in that** the pretension of the at least one pretensioning device (32) for adjusting the holder part (13) is preset depending on a weight force (G) of the workpiece (14) to be machined.

6. A workpiece holder device according to any one of the preceding claims,
**characterized in that** multiple pretensioning devices (32) are present.

7. A workpiece holder device according to claim 6,
**characterized in that** the pretensions of the pretensioning devices (32) are independently adjustable.

8. A workpiece holder device according to claim 6 or 7,
**characterized in that** the pretensioning devices (32) are arranged symmetrically to a center plane (M) through the holder (11).

9. A workpiece holder device according to any one of the preceding claims,
**characterized in that** the at least one pretensioning device (32) has a first end (37) and a second end (38) opposite the first end (37), the first end (37) and the second end (38) being arranged offset to one another in a normal direction (N) orthogonal to the holder part (13) .

10. A workpiece holder device according to any one of the preceding claims,
**characterized in that** the holder (11) is rotatably supported around an axis of rotation (D) by means of the support device (20).

11. A workpiece holder device according to any one of the preceding claims,
**characterized in that** the holder part (13) extends in a transverse direction (Q) away from the support part (12) .

12. A workpiece holder device according to claim 10 and according to claim 11,
**characterized in that** the axis of rotation (D) extends in transverse direction (Q).

13. A workpiece holder device according to any one of the preceding claims,
**characterized in that** the holder (11) is supported by means of a rest unit (26) on the side opposite the support device (20).

14. A workpiece holder device according to any one of the preceding claims,
**characterized in that** the holder (11) consists of a gray cast iron material.

15. A process for adjusting a machine tool workpiece holder device (10) according to any one of the preceding claims, wherein the pretension of the at least one pretensioning device (32) is preset according to the weight force of a workpiece (14) to be machined before the workpiece (14) is machined.

16. A process according to claim 15,
**characterized in that** the preset pretension of the at least one pretensioning device (32) is kept unchanged during the machining of a workpiece (14).

## Revendications

1. Dispositif porte-pièce (10) destiné à une machine-outil, comprenant un support (11) qui présente un élément de palier (12) qui est relié à un dispositif de palier (20) en vue du montage du support (11), le support (11) présentant un élément de support (13) qui s'étend à partir de l'élément de palier (12), dans le sens opposé à celui-ci, et qui est conçu pour porter une pièce à usiner (14),
**caractérisé en ce que**
il est prévu au moins un dispositif de précontrainte (32) qui est installé dans le support (11) et exerce une précontrainte au moins sur une partie de l'élément de palier (12) et/ou de l'élément de support (13),
le dispositif de précontrainte (32), au nombre d'au moins un, est ancré sur le support (22), à une première extrémité (37) et une deuxième extrémité (38) opposée à la première extrémité (37), et la précontrainte est générée entre ces extrémités (37, 38), et
que le dispositif de précontrainte (32) présente une première douille (34) sur la première extrémité (37) et une deuxième douille (35) sur la deuxième extrémité (38), chaque douille (34, 35) présentant un filetage interne de douille (40) et un filetage externe de douille (39), et dans lequel le filetage interne de douille (40) et le filetage externe de douille (39) d'au moins une douille (35) présentent des pas de filetage différents.

2. Dispositif porte-pièce selon la revendication 1, **caractérisé en ce que** la valeur de la précontrainte est choisie telle que le module d'élasticité (E) de la partie de l'élément de palier (12) et/ou de l'élément de support (13) qui est soumise à la précontrainte varie.

3. Dispositif porte-pièce selon l'une des revendications précédentes, **caractérisé en ce que** les douilles (34, 35) sont vissées avec les filetages externes de douille (39) dans un filetage interne de support (42, 43), respectivement associé, du support (11).

4. Dispositif porte-pièce selon l'une des revendications précédentes, **caractérisé en ce que** le dispositif de précontrainte (32) présente une tige filetée (36) qui est vissée respectivement avec une portion dans les filetages internes de douille (40) des deux douilles (34, 35).

5. Dispositif porte-pièce selon l'une des revendications précédentes, **caractérisé en ce que** la précontrainte du dispositif de précontrainte (32), au nombre d'au moins un, est préréglée en vue de l'ajustage de l'élément de support (13), en fonction d'un poids (G) de la pièce (14) à usiner.

6. Dispositif porte-pièce selon l'une des revendications précédentes, **caractérisé en ce que** plusieurs dispositifs de précontrainte (32) sont prévus.

7. Dispositif porte-pièce selon la revendication 6, **caractérisé en ce que** les précontraintes des dispositifs de précontrainte (32) peuvent être réglées indépendamment les unes des autres.

8. Dispositif porte-pièce selon la revendication 6 ou 7, **caractérisé en ce que** les dispositifs de précontrainte (32) sont installés de manière symétrique par rapport à un plan médian (M) passant par le support (11).

9. Dispositif porte-pièce selon l'une des revendications précédentes, **caractérisé en ce que** le dispositif de précontrainte (32), au nombre d'au moins un, présente une première extrémité (37) et une deuxième extrémité (38) opposée à la première extrémité (37), la première extrémité (37) et la deuxième extrémité (38) étant disposées de manière décalée l'une par rapport à l'autre, dans une direction de normale (N) à angle droit par rapport à l'élément de support (12).

10. Dispositif porte-pièce selon l'une des revendications précédentes, **caractérisé en ce que** le support (11) est monté à l'aide du dispositif de palier (20) avec possibilité de rotation autour d'un axe de rotation (D).

11. Dispositif porte-pièce selon l'une des revendications précédentes, **caractérisé en ce que** l'élément de support (13) s'étend dans une direction transversale (Q) à partir de l'élément de palier (12).

12. Dispositif porte-pièce selon la revendication 10 et selon la revendication 11, **caractérisé en ce que** l'axe de rotation (D) s'étend dans la direction transversale (Q).

13. Dispositif porte-pièce selon l'une des revendications précédentes, **caractérisé en ce que** le support (11) prend appui sur le côté opposé au dispositif de palier (20), au moyen d'une unité d'appui (26).

14. Dispositif porte-pièce selon l'une des revendications précédentes, **caractérisé en ce que** le support (11) est constitué d'un matériau de fonte grise.

15. Procédé d'ajustage d'un dispositif porte-pièce (10) d'une machine-outil selon l'une des revendications précédentes, selon lequel la précontrainte du dispositif de précontrainte (32), au nombre d'au moins un, est préréglée en fonction du poids d'une pièce (14) à usiner, avant que la pièce (14) ne soit usinée.

16. Procédé selon la revendication 15, **caractérisé en ce que** la précontrainte préréglée du dispositif de précontrainte (32), au nombre d'au moins un, est maintenue inchangée pendant l'usinage d'une pièce (14).
